(19) Europäisches Patentamt
European Patent Office
Office européen des brevets

(11) **EP 4 390 832 A1**

(12) **EUROPEAN PATENT APPLICATION**

(43) Date of publication:
**26.06.2024 Bulletin 2024/26**

(51) International Patent Classification (IPC):
**G06T 5/00** *(2024.01)* **G06T 5/30** *(2006.01)*
**G06T 5/40** *(2006.01)*

(21) Application number: **22215049.2**

(22) Date of filing: **20.12.2022**

(52) Cooperative Patent Classification (CPC):
**G06T 5/70; G06T 5/30; G06T 5/40; G06T 5/60;**
G06T 2207/10056; G06T 2207/20036;
G06T 2207/20081; G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Leica Microsystems CMS GmbH
35578 Wetzlar (DE)**

(72) Inventors:
• **Lee, Shih-Jong James**
 **35578 Wetzlar (DE)**
• **Phan, Tuan**
 **35578 Wetzlar (DE)**
• **Sasaki, Hideki**
 **35578 Wetzlar (DE)**
• **Hsieh, Chung-Ju**
 **35578 Wetzlar (DE)**

(74) Representative: **Paustian & Partner Patentanwälte
mbB**
 **Oberanger 32**
 **80331 München (DE)**

(54) **IMAGE PROCESSING METHOD TO REMOVE WHITE NOISE AND STRUCTURED NOISE**

(57) A computer-implemented method (100) for training an image denoising machine-learning model is provided. The method may comprise the step of providing at least one modified copy of a noisy raw image (102) to a machine-learning model (106). The method may comprise the step of training the machine-learning model (106) based at least in part on the at least one modified copy of the noisy image (102). The method may comprise the step of predicting at least one random-noise corrected-image (108) from the noisy raw image (102) using the machine-learning model (106). The method may comprise the step of predicting (112) at least one guiding image (114) with structured-noise-corrected from the noisy raw image (102) or from a copy (110) of the noisy raw image (102). The method may comprise the step of optimizing the result of a decision function (116), wherein the decision function (116) is configured to compare at least a part of the random noise optimized image (108) with at least a part of the guiding image (114).

**FIG. 1**

EP 4 390 832 A1

**Description**

**TECHNICAL FIELD**

The present invention generally relates to the field of data processing in imaging applications, and in particular to improved techniques for obtaining better imaging results of images to be used in machine-learning.

**BACKGROUND**

Imaging is a technique of obtaining and interpreting images. Imaging is used in a variety of fields, ranging from microscopy in biological and medical applications to telescope image acquisition in astrophysics. Imaging comprises the image acquisition itself, as well as the data interpretation to set the images into context e.g., of a study or research topic. Therefore, image quality is important. Images typically contain noise limiting the interpretation capabilities. Improving image quality would allow to improve the interpretation capabilities. Data acquisition and interpretation comes at certain costs e.g., regarding computing resources.

It is therefore a problem underlying the invention to provide techniques to improve image quality and image interpretation, preferably at reduced costs and resources, and thereby overcoming the above-mentioned disadvantages of the prior art at least in part.

**SUMMARY**

In one embodiment of the invention, a computer-implemented method for training an image denoising machine-learning model is provided. The method may comprise the step of providing at least one modified copy of a noisy raw image to the machine-learning model. The method may comprise the step of training the machine-learning model based at least in part on the at least one modified copy of the noisy raw image. The method may comprise the step of predicting at least one random-noise-corrected image from the noisy raw image using the machine-learning model. The random noise may be at least partially corrected in the random-noise-corrected image, when compared to the noisy raw image. The method may comprise the step of predicting at least one guiding image with structured noise corrected from the noisy raw image. The structured noise may be at least partially corrected in the guiding image, when compared to the noisy raw image. Alternatively, the method may comprise the step of predicting at least one guiding image with structured noise corrected from a copy of the noisy raw image. The structured noise may be at least partially corrected in the guiding image, when compared to the noisy raw image and/or its uncorrected copy. The method may comprise the step of optimizing a result of a decision function. The decision function may also be called comparison function. The decision function may be configured to compare at least a part of the random-noise-corrected image with at least a part of the guiding image. The method allows to improve the image data quality by improving the noise, preferably the structured noise as well as the random noise.

Providing at least one modified copy of a noisy raw image may refer to transferring the at least one modified copy of a raw image, preferably in a digital form. Additionally, or alternatively, the copy may be stored either permanently or even temporarily e.g., stored on a non-tangible computer-readable medium. Furthermore, the copy may be provided as a digital information and/or as sort of a data stream for further processing in a respective method and/or imaging system and/or imaging apparatus as it is described herein.

Training the machine-learning model with the at least one modified copy of the noisy image may provide steps of inputting the at least one modified copy into a non-tangible computer-readable medium. Therein at least one training step of a training method of a machine-learning model is performed as described in the following. A modified copy of the noisy image may be a copy of the noisy image wherein at least a single pixel's information has been modified. The copy may be a digital copy of the noisy raw image. The information of several pixels may be modified simultaneously or on a step-by-step basis. The information may also be referred to as the pixel's data or part thereof. The copy may be used as input training data for predicting at least one random-noise-corrected image from the noisy raw image using the machine-learning model as described in the following. A random-noise corrected image may be called a random noise optimized image.

A random noise optimization term may be derived by training a machine learning model. In doing so, a single pixel value may be predicted based on its surroundings. This pixel value may be used to correct for random noise in the noisy raw image or in a copy of the noisy raw image. A pixel's receptive field can be defined as a square patch around a certain pixel. This square patch may mimic an area around the pixel where an image e.g., obtained by an imaging apparatus and/or imaging system, can be considered overlapping with the pixels of a detector or sensor which might find representation as image pixels. This representation may be a direct representation or an indirect representation. In indirect representation the amount of sensor pixels deviates from the amount of image pixels. Therefore, a mapping between both may take place. In other words, the pixels from a receptive field can be considered to be exposed to a recorded image. This recorded image may be mapped to the pixels of the respective digital image. This square patch can be called input patch. The noisy raw image's copy may be disassembled into several patches. Alternatively, or additionally, the input patches may be copied from the noisy raw image in a way to represent at least parts of the noisy raw image. "Stitching" the (unmodified) patches back together could lead to a reconstruction of at least a part of the noisy raw image. The reconstructed part could be bigger than at least a single patch.

In an embodiment, a single pixel in a square patch may be modified. Therefore, a blind spot can be mimicked. In such a blind spot, no information is to be attached to the single pixel or present pixel information is erased resulting in a blind pixel. Alternatively, or additionally, the blind pixel can be filled by randomly choosing another pixel from the pixel's receptive field and/or its surroundings to fill the blind pixel with the respective information. A machine-learning denoising model may be trained using the respective blind-spot copy as training input. Using the modified copy as input training data may prevent the machine-learning denoising model from learning an identity operation. A so-called blind-spot network may be used to allow for predicting a respective random noise optimization term. Alternatively, or additionally, a machine learning model may be used to predict the random noise optimization term. In both, alternatively or additionally, a masking scheme may replace the value in the center of each input patch with a randomly selected value from the surrounding area, particularly the receptive field. This can effectively erase the (central) pixel's information and may prevent the network from learning an identity operation. This is based on random noise being identical and independently distributed noise. The resulting copy of the noisy raw image (even in the form of a single patch) with an erased pixel may be a modified copy as described above. An identity operation would be the operation that would result in the identical image, when starting from a random noise image. The respective use of a blind-spot network allows to operate the training method fully unsupervised.

In other words, input as well as target may be derived from a single noisy training image. Simply extracting a patch as input and use its center pixel as target, would train the network to just learn the identity, by directly mapping the value at the center of the input patch to the output. Therefore, the central pixel information may be replaced by a respective pixel data from a surrounding pixel as described above. The surrounding may be described as the receptive field, accordingly. A clean target e.g., from a noise corrected image, may not be used for training. To allow efficient training of a machine learning model e.g., a convolutional neural network (CNN) with a method as described above, simultaneously masking multiple pixels in larger training patches and jointly calculating their gradients may be provided.

Alternatively, or additionally, a machine learning model may be trained to predict per-pixel intensity distributions. The posterior distribution of a pixel can be computed. This approach can be combined with a general noise model e.g., represented as a histogram. Here, the at least one single pixel modified to obtain a modified image may result from training the machine learning model on using respective intensity distributions, histograms and/or noise models. A corresponding histogram may be called an observation likelihood. Additionally, or alternatively, a distribution of possible true pixel intensities can be set as priors. They may be represented by a set of predicted samples. The noise model may be computed from a sequence of noisy calibration images. The noise model may characterize the distribution of noisy pixels around their respective ground truth signal value. The ground truth signal value may be derived from the noisy calibration images. It mimics the real signal that may be underlying the respective images in case the random noise contribution is corrected for. Noise models may be provided as a collection of histograms. Implementing a noise model improves the reconstruction quality of random-noise-corrected images.

In other words, a pixel, particularly a central pixel on a receptive field on an input patch, is masked using a mask and/or a masking scheme as described above to mimic a blind spot.

The masking may be obtained by a fully digital process. This may be the case for all masking processes described here or elsewhere throughout the description of embodiments. Different from the approach described above, the blind pixel may be filled based on the random noise model, a histogram profile and/or a respective intensity distribution predicted or assumed. This way a modified copy is obtained and used as training input to prevent the machine-learning denoising model or any particular network used to purely learn the identity.

Alternatively, or additionally, the histogram-based noise models can be replaced by parametric noise models. An example of parametric noise models which can be used are Gaussian Mixture Models (GMM). Furthermore, suitable noise models can be created using a bootstrap step, even in the absence of calibration data. This may render the determination of the random noise optimization term fully unsupervised. A respective method may further comprise the steps of training and applying the unsupervised prediction of the random noise optimization term on the body of available noisy images. Random noise denoised images may be predicted as if they were a ground truth. Henceforth, they may be called pseudo ground truth. The corresponding noisy and denoised pixel values may be used to either construct a histogram-based noise model or to determine a parametric based noise model.

Alternatively, or additionally, training may be performed directly on the noisy image. According to an embodiment of the invention, an unseen pixel value is based on its surroundings, with training the machine learning model on all pixels and surroundings of the training images, not solely on a single pixel exchanged or modified and its respective surrounding. According to an embodiment, at least one modified copy may be made in that it is shifted by at least one direction of the image in the pixel plane with respect to the pixel plane of the noisy raw image. This may remove and/or reduce independent and identically distributed noise, so-called IID noise.

Independent and identically distributed noise, so-called IID noise, is generally referred to in the context here for any type of random noise. A source of IID noise as matter of example may result from e.g., white noise. Non-IID noise, so-called structured noise, may result from structured noise originating in the imaging apparatus and/or the imaging system. It may be caused by its electronics, its imaging optics and/or other apparatus/setup parameters and/or functional groups and/or components. The non-IID noise may result from the imaging method and/or apparatus in a reproducible manner. Non-IID noise may imprint a noisy structure and/or pattern onto the image, particularly identical on each image, independent from any imaging situation and/or independent from any imaged object.

In other words, the structure/pattern may not result from something imaged, but at least to some extent may result from a systematic error in the imaging method and/or from a systematic error in the setup of the imaging apparatus, its optics and/or its electronics. Correcting structured noise may reduce the maintenance costs, as no physical hardware adjustments may have to be performed. In some cases, hardware modifications may not be manageable or may not be feasible. This can be accounted for in a digital correction scheme presented here.

The method may comprise the step of predicting at least one guiding image with structured noise corrected, at least partially, from the noisy raw image. Alternatively, the method may comprise the step of predicting at least one guiding image with structured noise corrected from a copy of the noisy raw image. Structured noise may not be trained away using any of the previously described approaches to train correcting for random noise. Particularly, structured noise may not be fully trained away. Nevertheless, the respective method described here may improve the correction of structured noise as well. Therefore, the image quality may be further improved. A structured noise optimization term may be derived from the guiding image, and it may be compared to the underlying noisy raw image. Therefore, the method may allow to predict a random-noise-corrected image and a structured noise corrected image. This may further allow generating two terms of a respective decision function.

The method may further remove/reduce non-IID noise by using a guiding image processing method such as structure guided processing to remove non-IID noise. Noise free or noise reduced images may be generated this way. These images may be included as additional constraints for machine learning model training. The guiding image processed images may be considered as pseudo ground truth (pGT) images to train for noise reduction, particularly both, IID and non-IID noise. Training the model on the raw input images may preserve all the details. Therefore, not only the IID noise may be removed, but also the non-IID noise based on using a guiding image created by guiding image processing that may further remove the structured noise. Simultaneously shape and resolution may be preserved, particularly without blur, ringing, overshoot, or pre-shoot potentially caused by a phase shift operation or by a linear filtering operation otherwise.

A size and/or a shape of a surrounding can be flexibly defined to effectively remove IID noise for given data characteristics and applications. Alternatively, or additionally, the guiding image processing methods can also be flexibly defined. Combining the complementary advantages of image processing and machine learning may yield the optimal overall noise removal outcomes.

In other words, the method doesn't need a pairing of images that would allow to correct pixel differences between two images, particularly between a noisy image and a clean target image, wherein the clean target image comprises a representation of a ground truth, particularly without noise. This reduces the complexity in preparation, and it may simplify the handling of the method. Further, the method and/or any of its steps may not be based on assumptions regarding noise level and/or noise distribution. Furthermore, the method does not necessarily rely on respective noise models. Furthermore, it does not need any type of parametric optimization or parametric models e.g., no Gaussian Mixture optimization (GMO) and no Gaussian Mixture Model (GMM) are necessary. This allows to also predict non independent and non-identically distributed noise (non-IID noise).

The method may comprise the step of optimizing the result of a decision function. Therein, the decision function may compare at least a part of the random-noise-corrected image with at least a part of the guiding image. Comparing at least a part of a random-noise-corrected image and at least a part of the guiding image preferably allows to improve the underlying noisy raw image and/or a copy of the underlying noisy raw image with respect to the structured noise in the noisy raw image. The decision function may comprise a random noise optimization term and a structured noise optimization term. The decision function may be any function which allows for comparing the two noise optimization terms described in this context.

The step of optimizing a result of a decision function may correspond a mathematical operation of determining an optimum. This optimum may be a global minimum and/or global maximum of the respective function. Additionally, or alternatively, a local maximum and/or local minimum may be determined.

In some embodiments a pre-set value may be set as a convergence threshold before training. In alternative embodiments, a value may be monitored during training. Training may be stopped if the value is no longer decreasing corresponding to reaching a (local) minimum or if the value is no longer increasing corresponding to reaching a (local) maximum.

In one practical implementation of the method the decision function may be a loss function to be minimized.

Minimizing a loss function allows to implement a comparison of the noise terms to improve the image quality. A loss function can also be called a cost function or an error function. It may be a function mapping values of one or more variables onto a real number intuitively representing some "cost" associated with an event. Herein, the cost may result from the correction of noise in the noisy raw image or from its copy to get a noise corrected image. An optimization problem seeks to minimize a loss function. In case a loss function is used, in some embodiments a pre-set value may be set as a convergence threshold before training. In alternative embodiments, the loss value may be monitored during training. Training may be stopped if the loss is no longer decreasing corresponding to reaching a (local) minimum.

A decision function may be either of a loss function as described above or its opposite. The opposite of a loss function may be called a reward function, a profit function, a utility function, or a fitness function, to give it a few equally descriptive names. In one practical implementation of the method a reward function may be implemented. In that case the reward function is to be maximized. Both loss functions as well as reward functions may comprise terms from several levels of an (algorithmic) hierarchy. In case a reward function is used, in some embodiments a pre-set value may be set as a convergence threshold before training. In alternative embodiments, the revenue value may be monitored during training. Training may be stopped if the revenue is no longer increasing corresponding to reaching a (local) maximum.

Additionally, or alternatively, the machine-learning model comprises at least a convolutional neural network. Convolutional neural networks (CNNs) improve the performance with image processing. A CNN is a deep learning algorithm responsible for processing animal visual cortex-inspired images in the form of grid patterns. The grid may be a representation of a pixel-based image structure. CNNs are designed to automatically detect and segment specific objects and learn spatial hierarchies of features from low to high-level patterns. They may have three main types of layers, at least one convolutional layer, at least one pooling layer and at least one fully connected layer (FCL). A convolutional layer may be the first layer, potentially followed by additional convolutional layers or pooling layers. The fully connected layer may function as final layer. With each layer, the CNN may increase in its complexity, and it may identify greater portions of the image. Earlier layers focus on simple features, such as colors and edges. As the image data progresses through the layers of the CNN, it may start to recognize larger elements or shapes of the object until it finally identifies the intended object. The intended object may be a structure / pattern in the noise profile, not necessarily something in the image that has a representation in the real world such as a shape or pattern of an imaged object or imaged scene. An imaged scene may be a multiplicity of objects and/or their arrangement in space. Furthermore, an imaged scene may evolve over time.

In one practical implementation of the method the loss function may be of the type as given in formula (1):

$$\mathcal{L}=\sum_t\left[\|I_t-I'_t\|+\lambda\|I_{t\_n}-I'_t\|\right].$$

In formula (1), $I_t$ is the noisy raw image, $I'_t$ is a predicted image, $I_{t\_n}$ is the guiding image, and $\lambda$ is a weighting factor. The loss function comprises a random noise optimization term as first term and a structured noise optimization term as second term. The loss function allows to compare both terms to implement noise correcting the noisy raw image and/or a copy of the noisy raw image.

According to an aspect of the invention the predicted image may be a random-noise-corrected image and the random-noise-corrected image may be fed back into the computer-implemented training method to iteratively optimize the result of a decision function. Alternatively, or additionally, the random-noise-corrected image may be fed back into the computer-implemented training method to train the machine-learning model. This allows to implement an iterative training approach to further improve the performance of the method. In according embodiments the random-noise-corrected image may be fed back iteratively into the training method. This may iteratively improve the predicted image as the random noise correction may improve iteratively as well. This further improves the output, a (random) noise corrected image.

Alternatively, or additionally, a guiding image, which may be a structured-noise-corrected version of the noisy raw image, may be fed back into the computer-implemented training method to iteratively optimize the result of the decision function. Alternatively, or additionally, the guiding image may be fed back into the computer-implemented training method to train the machine-learning model. In respective embodiments the structured-noise-corrected image, respectively a guiding image, may be fed back iteratively, particularly replacing the noisy raw image as input image, to iteratively improve the random noise correction as well. The structured noise may not imprint on the fed-back image, particularly not to the same extend as in the noisy raw image. Therefore, any potential interferences from the structured noise with random noise may be reduced. This is of particular interest in cases where the random noise might be on the same level as some structural real features of an imaged object or of an imaged scene. In these embodiments, it might be particularly the case to iteratively exchange the input image by a random-noise-corrected image with a guiding image.

According to some embodiments of the invention, a computer-implemented method for training a random noise image denoising machine-learning model is provided. The method may comprise the step of providing at least one noisy raw image. Further, a step of providing at least one unidentical copy of the noisy raw image may be provided. Therein, the at least one unidentical copy may be shifted by at least one pixel with respect to the noisy raw image. The method may comprise the step of feeding the at least one unidentical copy to the machine-learning model to be trained. The method may comprise the step of training the machine-learning model based at least in part on the at least one unidentical copy. Furthermore, the step of predicting at least one random-noise-corrected image from the at least one unidentical copy using the machine-learning model may be provided.

Providing at least one noisy raw image has been described elsewhere throughout the description. A recasting of it is avoided for matters of conciseness. The definition may apply here accordingly. This definition may further apply to providing at least one unidentical copy of the noisy raw image. An unidentical copy may be a copy of the noisy raw image wherein at least a single pixel's information has been modified as described throughout the description. The unidentical copy may be generated by shifting the copy by at least one pixel with respect to the noisy raw image. The complete image may be shifted by a single pixel array line. Additionally, or alternatively, the image may be truncated with respect to a single pixel array at least in either of the shifting direction or the anti-shifting direction to account for boundary conditions. Furthermore, the original noisy raw image may be truncated accordingly. This may lead to a respective image pair of same pixel size and pixel dimension. Furthermore, truncation may avoid any boundary related artefacts.

The at least one unidentical copy may be fed into the machine-learning model to be trained. Feeding the at least one unidentical copy into the machine-learning model refers in this context to the transfer of the copy's data to the machine-learning model, accordingly. Training the machine-learning model, at least in part, may be based on the at least one unidentical copy. The unidentical copy may comprise several differences with respect to the noisy raw image as it may be shifted by a full line of pixels. The training itself may be as described throughout the description, accordingly. Shifting the image by a single pixel may result in a shift of at least a complete line of pixels (pixel array) and/or by shifting the complete image by a respective pixel line. Based thereon, a multitude of pixel changes from noisy raw image or its identical copy, to the respective shifted copy may result. Therefore, not only a single pixel may be masked and/or amended. Therefore, no multiplicity of patches is necessarily to be fed to the training method as the machine-learning denoising method configured to be trained for correcting random noise may be trained on all pixels and their surroundings simultaneously. This may increase the training and operation speed. At least one random noise optimized image from the at least one unidentical copy may be predicted by using the machine-learning model. This image may be provided for further processing for use in the training methods as described here.

In a practical implementation of the method eight unidentical copies of the noisy raw image may be made. Each unidentical copy may be shifted by at least one pixel in a direction of the noisy raw image and fed to the machine-learning model to be trained. The unidentical copies may therefore be different from each other as well as different from the noisy raw image.

Alternatively, or additionally, the machine-learning model may comprise at least a convolutional neural network. Further alternatively, or additionally, a structured noise may be at least partially corrected based on a guiding image. This allows to increase the operational speed as well as the training speed. Furthermore, a multiplicity of patches does not have to be provided, wherein each patch differs at least in a single pixel. Each of the following shifted unidentical copies may be one of the eight copies provided to the training method: shift vertically to the top, shift vertically to the bottom, shift horizontally to the left, shift horizontally to the right, shift diagonally to the top left, shift diagonally to the top right, shift diagonally to the bottom left, shift diagonally to the bottom right. Therefore, a multiplicity of unidentical pixels is provided for training, as all pixels in the image will be shifted with respect to the copy of the noisy raw image or the unshifted copy thereof. The machine-learning denoising model may be trained on all pixels and their surroundings simultaneously. This may improve the operational speed of training and reduces the resources necessary as no multiplicity of patches with single pixel modifications has to be provided.

In further embodiments of the invention, a computer-implemented image denoising method may be provided. The method may comprise the step of providing at least one identical copy of the noisy raw image. It may further comprise the step of feeding the at least one identical copy to a trained machine-learning model. The machine learning model has preferably been trained based on a training method described above. The method may comprise the step of restoring an output image with optimized noise. The method allows to process the image denoising and it may allow to apply the trained machine learning model. In doing so, providing a noise model may not be necessary. This increases the performance of the method as no model has to be obtained, stored and/or provided for before and/or during operation. Furthermore, no assumptions regarding noise distribution and noise level may have to be provided. This improves the output result. Further, it improves the interpretability of the denoised image as the image quality may be improved.

In a practical implementation of the method eight identical copies of the noisy raw image may be made. The number of copies may correspond to the respective number of unidentical copies provided in a training method as described above. The number of copies can be called the power of the model. A structured noise may at least partially be corrected based on a guiding image.

Alternatively, or additionally, the machine-learning model may comprise at least a convolutional neural network. Convolutional neural networks have been described in detail above. The respective advantages and features apply here as well. Particularly, the convolutional neural network architecture is the same as for the training method.

According to some embodiments of the invention the guiding image may be predicted based on at least one of the following steps, a structured noise removal, a random noise removal, or a normalization. Determining the structured noise may further provide a respective random noise removal. Any of the methods described above may allow to predict a guiding image or may be implemented and configures to do so. This guiding image may be used as the basis for determining and for correcting structured noise as described in detail above.

According to some embodiments of the invention the normalization may comprise at least one of an increase of signal strength while suppressing noise, an adjustment of the normalization scale such that the signal intensity increases, an adjustment of the normalization scale such that the signal intensity increases as much as possible without saturation, or an adjustment of the normalization scale such that the normalization scale is settled to the 2 to 99.98 percentile. Normalization may allow to avoid saturation of certain pixels and/or it may avoid so-called cut-off pixels which are set to a certain level to implement data truncations at a certain intensity minimum and/or maximum. Thus, normalization may improve the image quality and may suppress artifacts.

According to some embodiments of the invention the structured noise may be removed based on varying sizes of structuring elements in a morphological operation. In mathematical morphological operations a structuring element is a shape, used to probe or interact with a given image. It shall allow to draw conclusions on how this shape fits or misses the shapes in the image. Morphological operations may be dilation, erosion, opening, and closing, as well as hit-or-miss transforms. Additionally, or alternatively, the structured noise may be removed based on varying sizes of kernels in a morphological operation. Additionally, or alternatively, the structured noise may be removed based on a morphological operation applying at least a single straight line as structuring element and/or as a kernel. Straight lines allow to operate on the image in a line-by-line basis and to perform the corresponding morphological operation horizontally and/or vertically. Additionally, or alternatively, the structured noise is removed based on an opening and/or closing operation applied as morphological operation identifying the horizontal and/or vertical components of an image. Additionally, or alternatively, an offset may be added or subtracted from the image during structured noise removal. The offset may be based on the overall dynamic range of the data. The offset may be empirically determined to bring the illumination and the brightness back up to where it suits the application. All these features described here may allow to implement a structured noise correction to improve the image quality. Furthermore, it allows identifying at least one vertical component and/or at least one horizontal component of the input image to correct for respective structured noise.

As matter of example, performing an opening operation may allow to remove small structural features ("blobs") from an image. In an opening operation, first an erosion may be applied to remove the small blobs, then a dilation may be applied to regrow the size of the original object. The opening operation is idempotent. A closing operation may be used to close "holes" inside of objects or for connecting components together. In a closing operation a dilation may be followed by an erosion. A closing operation is idempotent. Using these operations allows to identify the structured noise in an image and to isolate it from the random noise. On a peak, a maximum or data hill, an opening operation may be applied, whereas a closing operation may be applied in a dip, a minimum or a data valley. With increase in structuring element size and/or increase in kernel size sensitivity may decrease. Therefore, the method may start with smaller structured elements and/or smaller kernel sizes. The method may be implemented to first try to remove bright areas and then try to remove dark areas. The number of iterations may be limited to a pre-set value. This may reduce the risk that with increase in iterations a certain risk to cut off relevant structured data increases as well.

According to another aspect of the invention, a data processing apparatus may be provided. This data processing apparatus may in particular be a computer device or a control unit for an imaging device or imaging system. They may comprise means for carrying out any of the methods described above.

Embodiments of the invention also provide a data processing apparatus, in particular a computer device or a control unit for a microscope and/or a telescope, comprising means for carrying out any of the methods disclosed herein. A computer program with a program code is also provided for performing any of the methods disclosed herein when the computer program is run on a processor.

Certain aspects of the invention also provide a dataset, in particular a training dataset, validation dataset and/or training dataset, usable for a machine-learning model. The dataset may comprise a plurality of microscopy images, or references thereto. The images may be obtained using any of the methods disclosed herein.

Accordingly, embodiments may be based on, or allow for, using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g., sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g., a classification algorithm, a regression algorithm or a similarity learning algorithm. Classification algorithms may be used when the outputs are restricted to a limited set of values (categorical variables), i.e., the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied, and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e., outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g., be used to store, manipulate, or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g., based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e., support vector networks) are supervised learning models with associated learning algorithms that may be used to analyze data (e.g., in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

The possible use cases for the results produced by embodiments of the invention are manifold. For example, models may be trained to detect specific cell phenotypes, or to target specific organelles, and compare them at different SNRs. This can help to create models that evaluate phototoxicity of assays, or even simpler than that by using simple cell detection and segmentation (cell counting and measures like area of cell nuclei, or if some markers are showing or not).

According to another aspect of the invention, an imaging device or imaging system may be provided. This imaging device and/or imaging system may in particular be a microscope or telescope. They may be configured for use in any of the methods described above. With respect to the imaging device or imaging system, the device or system may provide the same technical advantages as described with respect to the methods described above.

## SHORT DESCRIPTION OF THE FIGURES

The disclosure may be better understood by reference to the following drawings:

FIG. 1: A schematic overview of a workflow to train an image denoising machine-learning model.

FIG. 2: A schematic overview of an image denoising workflow to remove random noise.

FIG: 3: A schematic overview of an image processing guided noise removal workflow to remove structured noise.

FIG. 4A: A schematic illustration of a 1D opening and closing operation on structured noise performed with a first and second type of structuring elements in a workflow as shown in FIG. 3.

FIG. 4B: A schematic illustration of a 1D opening and closing operation on structured noise performed with a third and fourth type of structuring elements in a workflow as shown in FIG. 3.

FIG. 4C: A schematic illustration of a structure reconstructed from a noisy image based on the 1D opening and closing operations on structured noise as shown in FIG. 4A and FIG. 4B, performed in a workflow as shown in FIG. 3.

FIG. 5: A schematic overview of a workflow to perform the opening and closing operation shown in FIG. 4.

FIG. 6: A schematic overview of an iterative opening and closing operation workflow configured for IID noise removal in a workflow as shown in FIG. 3.

FIG. 7: A schematic illustration of a system in which embodiments of the invention may be implemented.

## DETAILED DESCRIPTION

Exemplary embodiments of the invention will now be described which provide a workflow to train an image denoising machine-learning model, an image denoising workflow to remove random noise and an image processing guided noise removal workflow to remove structured noise.

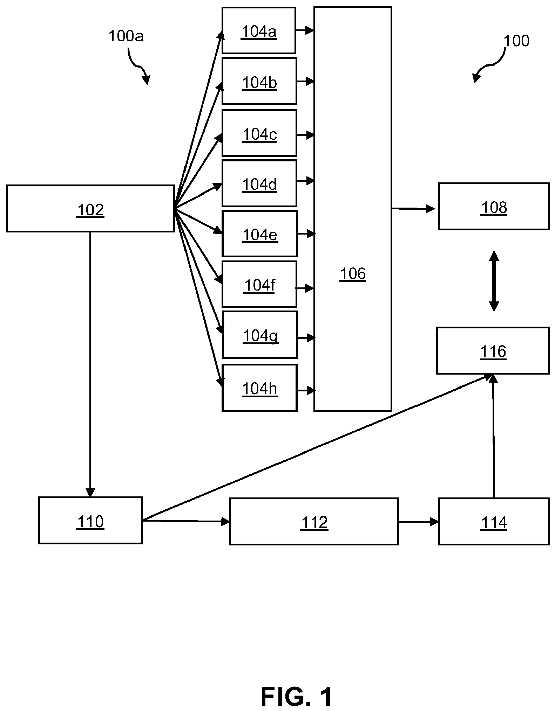

Fig. 1 illustrates a schematic overview of a workflow to train an image denoising machine-learning model 106. The workflow may be implemented in a computer-implemented method 100 configured to train an image denoising machine-learning model 106. The computer-implemented training method 100 may at least provide the following steps.

In a step at least one modified copy 104a ... 104h of a noisy raw image 102 is provided to the machine-learning model 106. The machine-learning model 106 is trained with the at least one modified copy 104a ... 104h of the noisy image 102. At least one random-noise-corrected image 108 is predicted from the noisy raw image 102 using the machine-learning model 106.

Furthermore, at least one guiding image 114 is predicted 112 with structured noise corrected from a copy 110 of the noisy raw image 102. Based on the copy 110 of the noisy raw image 102, on the guiding image 114 and on the random noise optimized image 108 two terms of a decision function 116 are obtained and filled to optimize the result of the decision function 116.

The optimization according to an embodiment is any suitable mathematical optimization that allows to reach a local optimum. According to embodiments, either of a global and/or of a local optimum may be preferred. An optimum can be a maximum or a minimum, both either globally and/or locally. According to embodiments, a pre-defined threshold for the result of the decision function 116 can be set as a parameter to evaluate the optimization routine. Alternatively, the optimization may be monitored to check if a value (loss or revenue value) keeps changing and therefore has not reached an optimum (minimum or maximum).

In an embodiment, the first term of the decision function 116 corresponds to at least a part of the random noise optimized image 108, while a second term corresponds to at least a part of the guiding image 114. This allows to compare at least a part of the random-noise-corrected image 108 with at least a part of the guiding image 114 to optimize the decision function 116.

In an embodiment the decision function 116 is a loss function to be minimized. In such embodiments the optimization may be implemented as a routine to reach a global or local minimum.

Alternatively, a revenue function may be implemented in other embodiments as decision function. In such embodiments the optimization may be implemented as a routine to reach global or local maximum.

An example of a loss function may be of the type:

$$\mathcal{L}=\sum_t\left[\|I_t-I'_t\|+\lambda\|I_{t\_n}-I'_t\|\right],$$

wherein $I_t$ is the noisy raw image 102, $I'_t$ is a predicted image 108, $I_{t\_n}$ is the guiding image 114, and $\lambda$ is a weighting factor. The predicted image 108 may be the random-noise-corrected image.

In an embodiment, the machine-learning model 106 is a convolutional neural network (CNN). This improves the performance and the learning and training efficiency. The CNN is trained in that at least one noisy raw image 102 is provided such that at least one unidentical copy 104a, ... 104h of the noisy raw image 102 is obtained by shifting at least one pixel with respect to the noisy raw image 102. The at least one unidentical copy 104a, ... 104h is fed to the machine-learning model 106 for training. The machine learning model 106 is thus trained on the at least one unidentical copy 104a, ... 104h. As the copies are not identical to each other, the CNN cannot learn the identity. Therefore, the CNN learns to predict at least one random noise optimized image 108 from the at least one unidentical copy 104a, ... 104h. The predicted image may be fed back into the computer-implemented training method 100 to iteratively optimize the result of the decision function 116. Alternatively, or additionally, the predicted image 108 may be used to further train the CNN. The training of the CNN described here works for other machine learning models in a corresponding manner. The features and steps described here apply to other machine learning models accordingly and may thus be transferred.

In an exemplary embodiment eight unidentical copies 104a, ... 104h of the noisy raw image 102 are made. Each copy 104a, ... 104h is shifted by at least one pixel in a direction of the noisy raw image 102. Particularly, as all eight copies 104a, ... 104h are distinct from each other, one exemplary embodiment comprises that each of the following shifted unidentical copies 104a, ... 104h is set as one of the eight copies 104a, ... 104h provided to the training workflow 100a. One copy is shifted vertically to the top, one is shifted vertically to the bottom, one is shifted horizontally to the left, one is shifted horizontally to the right, one is shifted diagonally to the top left, one is shifted diagonally to the top right, one is shifted diagonally to the bottom left, one is shifted diagonally to the bottom right. This results in a multiplicity of unidentical pixels provided for training, as all pixels in the image will be shifted with respect to the copy of the noisy raw image or the unshifted copy thereof. The shifted images 104a, ... 104h may function as a training set for the training workflow 100a. This training workflow 100a can be a computer-implemented method or computer-implemented subroutine on its own. It may be possible to perform the respective training of the training workflow 100a to train a machine learning model to correct for random noise, so-called identical and individually distributed noise, abbreviated as IID noise.

In other embodiments, only a single pixel may be exchanged using a receptive field mask with a blind spot to eliminate the pixel information to obtain unidentical copies. Alternatively, or additionally a central pixel of a receptive field may be replaced with the pixel information of a pixel from the surrounding receptive field of the pixel to be exchanged. In these embodiments, the copies of the raw noisy image 102 may be based on patches of the raw noisy image 102. Thus, a multiplicity of unidentical copies 104a, ... 104h may be obtained as well. Using unidentical copies 104a, ... 104h obtained by the shifting approach as described above may generate a multiplicity of changed pixels of much higher order. Therein all pixels of the image are changed and thus used for training the machine learning model 106 simultaneously. This reduces the complexity of data handling and improves the performance of the method. Furthermore, no assumptions have to be set in advance of the method and no routines regarding noise models have to be loaded and/or to be held of respective noise models. This further improves the performance of the method as less resources have to be allocated. The respective machine learning model may be a CNN according to the description provided above.

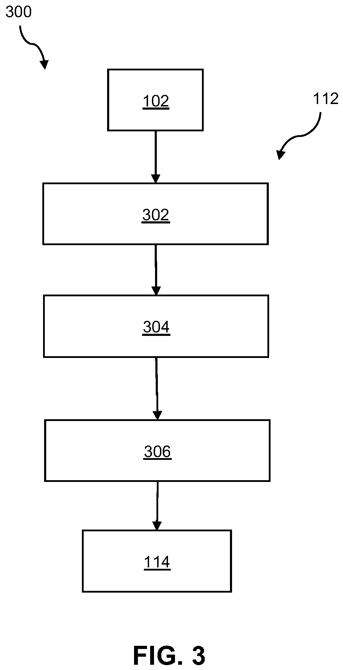

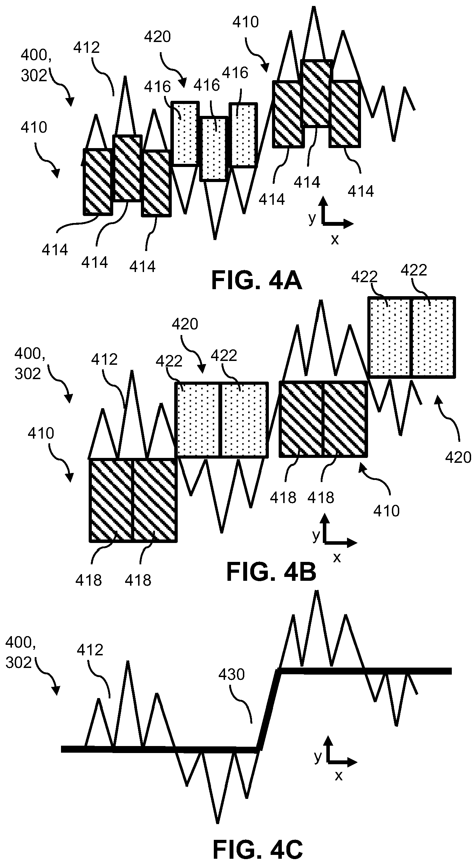

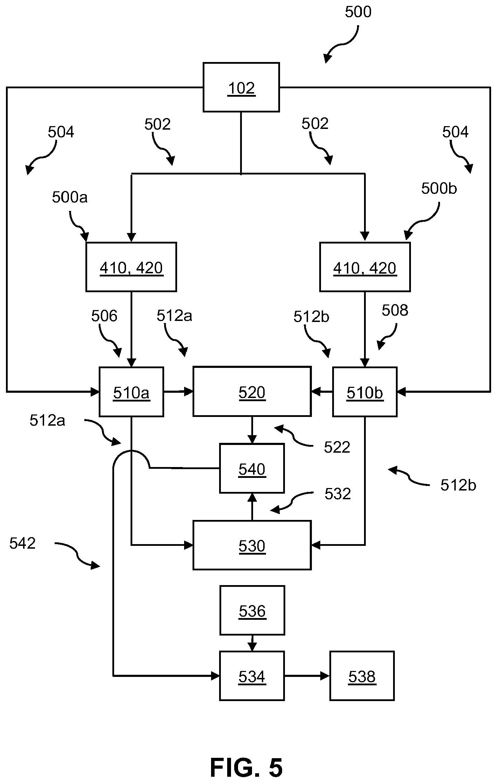

The prediction workflow routine 112 for predicting the guiding image 114 is illustrated in Fig. 3 and described in detail thereto. Therein, it is illustrated how a structure 430 (see FIG. 4C) is at least partially identified to obtain a structured-noise-corrected image as a guiding image 114 using a workflow as shown in FIG. 5 and described with respect thereto.

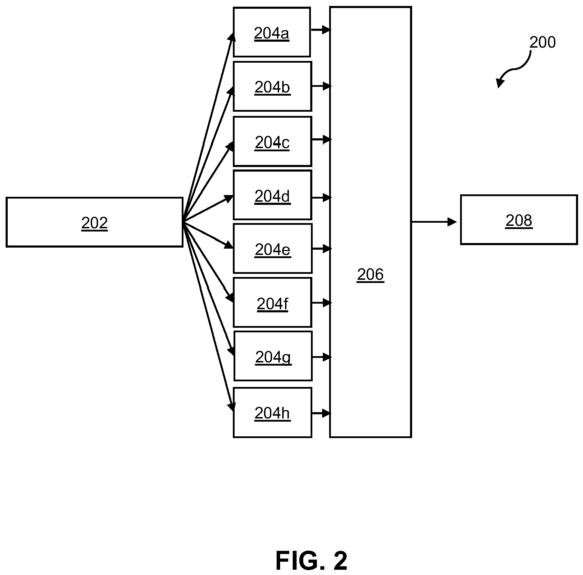

FIG. 2 illustrates the execution of a method 200 using a trained machine-learning model 206 to correct for random noise. In FIG. 2 a computer-implemented image denoising method 200 is illustrated with the following steps. In a step at least one identical copy 204a, ... 204h of the noisy raw image 202 is provided to feed the at least one identical copy 204a, ... 204h to the trained machine-learning model 206. The training is performed as illustrated and described with respect to the training workflow 100a shown in FIG.1. As described with respect to FIG. 1, the training workflow 100a can be based on feeding eight unidentical copies 104a, ... 104h of a noisy raw image 102 to a machine-learning model 106. In the computer-implemented denoising method 200 the number of identical copies 204a, ... 204h corresponds to the number of unidentical copies 104a, ... 104h in the training workflow 100a. Both methods are of the same power. In the embodiment illustrated in FIG. 2, eight identical copies may be provided for the denoising method 200. This allows to use the same architecture and subroutines for training as well as for execution. The computer-implemented method 200 may restore an output image 208 with optimized noise. This output image 208 with optimized noise may be fed back into a training method 100 and/or a training workflow 100a to iteratively improve the training. Additionally, or alternatively, it may function as a ground truth (GT) or pseudo ground truth (pGT) in some embodiments. As described above, the machine-learning model 106 may be a CNN. Recasting of the respective portion is omitted, and it is referred to the description of a CNN with respect to FIG. 1 for more details.

FIG. 3 illustrates the prediction workflow 112 for predicting a guiding image 114 as it may be applied in any method described above. Particularly, the prediction workflow 112 may form part of a method 100 configured to train a denoising machine-learning model 106. In other embodiments, the prediction workflow 112 may be an independent prediction workflow routine 300, performed independently from any random noise optimization workflow 100a. In any embodiment, the guiding image 114 may be predicted, either in a prediction workflow 112 or in an independent prediction workflow 300, based on a structured noise removal 302. A structure 430 (see FIG. 4C) may overlay with a random noise 412 (See FIG. 4A to FIG. 4C) overlaying a structure as illustrated in FIG. 4A to Fig. 4C. A detailed description thereof is given below, and it is referred to the corresponding section.

Additionally, or alternatively, a random noise removal 304 may be applied. Random noise may be corrected based on a trained computer-implemented method as it was described above. Additionally, noise may cover an underlying structure 430 in the image, or it might exhibit a structure 430 on its own. In the latter case, it is called structured noise or non-identical and non-individually distributed noise, abbreviated non-IID noise. FIG. 4A to Fig. 4C illustrate how a structure 430 can be isolated from an image, where the structure 430 is covered by random noise 412. The identified structure 430 may be structured noise, so-called IID noise. Alternatively, this structure 430 may be a real structure, wherein "real" refers to the fact that the image shows a structure 430 that is present in an object. Alternatively, the structure may be an "artificial" (in the sense of not real, but artifact caused) noise-based structure. This is the case, if the structure does not have a representation in the real imaged object or the real imaged scene, but results from non-IID noise, e.g., caused by the electronics, the optics and/or from any image acquisition method steps and/or data operation method steps. Further details will be described with respect to FIG 4A to FIG. 4C in the following.

In FIG. 3, additionally or alternatively to the above-described steps of the prediction workflow 112 or of the independent prediction workflow 300, a normalization 306 may be applied to the image 102 or a version of the image 102 (pre-)processed by the prediction workflow 112 or the independent prediction workflow 300. The normalization 306 may comprise at least one of an increase of signal strength while suppressing noise, an adjustment of the normalization scale such that the signal intensity increases, an adjustment of the normalization scale such that the signal intensity increases as much as possible without saturation, or an adjustment of the normalization scale such that the normalization scale is settled to the 2 to 99.98 percentile. Further particularly, the normalization scale may be settled to the 5 to 95 percentile, even further particularly the normalization scale may be settled to the 10 to 90 percentile. This optimizes the input data for an improved visualization and/or it reduces any artifacts from data prediction, particularly in case the guiding image 114 is iteratively used in further method steps.

In a particular embodiment of the prediction workflow 112 or of the independent prediction workflow 300, a structured noise removal 302 takes place before a random noise removal 304 takes place. The random noise removal may take place before a normalization 306. This concatenated way of processing the noisy raw image 102 allows to first remove the random noise 412 overlaying a structure 430 (shown in FIG. 4A to Fig 4C) that can already be identified to reduce the processing resources necessary for any further steps. Thereafter, the random noise or IID noise may be compensated to further increase the image quality. Normalization 306 allows to obtain a guiding image 114 that is adapted to the respective application and/or optimized for interpretation. Furthermore, artifacts that result from any of the previous method steps described above may be compensated that way.

FIG. 4A schematically illustrates a structure isolation workflow 400 that may be implemented as part of a structured noise removal 302 in the prediction workflow 112 or in the independent prediction workflow 300 as shown in FIG. 3. In the structure isolation workflow 400, a 1D opening operation 410 may be performed using a first type of structuring elements 414. The respective 1D opening operation 410 may be followed by a 1D closing operation 420. The closing operation 420 may use a second type of structuring elements 416. Opening operation 410 and closing operation 420 may be performed on random noise 412 overlaying a structure 430 (see FIG. 4C), here as an edge in the image as shown in FIG. 4C. The opening operation 410 and the closing operation 420 may follow the respective random noise 412 overlaying a structure 430. A peak or a (local) maximum is processed using an opening operation 410. A valley or (local) minimum is processed using a closing operation 420. Therefore, the respective concatenation of an opening operation 410 being followed by a closing operation 420 is based on the particularly illustrated example. Furthermore, the respective example represents a "cut" through a single line of pixels in the x-axis direction and a respective intensity profile in the y-axis direction. Respective operations may also be performed in a 2D image plane accordingly. Therein, respective 2D structures may be isolated which are either real structures or structured noise. The respective example illustrated in FIG. 4A to FIG. 4C is chosen for matter of explanatory purposes and does not limit the implementation to the 1D case.

FIG. 4B illustrates a next step of the structure isolation workflow 400 as shown in FIG. 4A and described above. A further round of 1D opening operations 410 and closing operations 420 may be applied. The opening operation 410 may use a third type of structuring elements 418, wherein the pixel-dimension in x-direction is increased. Therefore, bigger structures can be covered by the structural elements 418. The closing operation 420 uses a fourth type of structuring elements 422, wherein the pixel-dimension in x-direction is increased. Therefore, bigger structures can be covered by the structural elements 422.

FIG. 4C shows a schematic illustration of a structure 430 that may be reconstructed from a noisy raw image 102 (see e.g., FIG. 3) based on the iterative 1D opening operations 410 and the 1D closing operations 420 as shown in FIG. 4A and FIG. 4B performed iteratively and described above, particularly performed in a prediction workflow 112 or in an independent prediction workflow 300 as shown in FIG. 3 and described above. The opening operations 410 and the closing operations 420 allow to incrementally identify structures 430 that may be underlying random noise 412 overlaying a respective structure 430 described above. The identified structure 430 may be a real structure in the image. Alternatively, it may be a structured noise artefact that mimics a structure but being present in the noisy raw image 102 independently from any imaged object or imaged scene. Therefore, it could also be a structured noise feature. In the latter case the result of the structure isolation workflow 400 could be used in the respective structured noise removal 302 in the prediction workflow 112 or in the independent prediction workflow 300, both as shown in FIG. 3, to compensate for structured noise. The difference of interpretation what might be structured noise vs. what are real features may be arbitrarily set based on the maximum incrementation size of the structural elements 414, 416, 418, 422. The maximum incrementation size of the structural elements may be set based on the imaged object and the respective tradeoff of resolution acceptable for potential real features being isolated and subtracted potentially as structured noise.

The operations shown in FIG. 4A to FIG. 4C may be summarized as follows. Structured noise may be isolated from background (random) noise 412 based on varying sizes of structuring elements 414, 416, 418, 422 in a morphological operation 500 (see FIG. 5 and its description below). The morphological operation 500 may be any of an opening operation 410 and/or a closing operation 420. Alternatively, or additionally to the structuring elements 414, 416, 418, 422 kernels with varying sizes may be used. The structured noise may be removed based on a morphological operation 500 applying at least a single straight line as structuring element 414, 416, 418, 422 and/or as kernel. Furthermore, the structured noise may be removed based on an opening operation 410 and/or a closing operation 420 applied as morphological operation 500 and potential identification of structures 430 underlying (random) noise 412 as structural noise. This may allow identifying the horizontal and/or vertical components of an image 102, 110 (see FIG. 1 and its description above) and respective structures 430 therein. Furthermore, an offset 534 (see FIG. 5 and its description below) may be added or subtracted from the image 102, 110 during structured noise removal 302 (see FIG. 3 as well as FIG. 5 for further details). This allows to improve the image output for improved interpretation of the image content.

FIG. 5 illustrates a schematic overview of a workflow to perform the opening operation 410 and/or closing operation 420 shown in FIG. 4 and as described above and to compensate structured noise based on the results of the respective morphological operation 500. The workflow shown in FIG. 5 represents a schematic layout of a morphological operation 500, which is represented at least partially by the opening operation 410 and/or the closing operation 420.

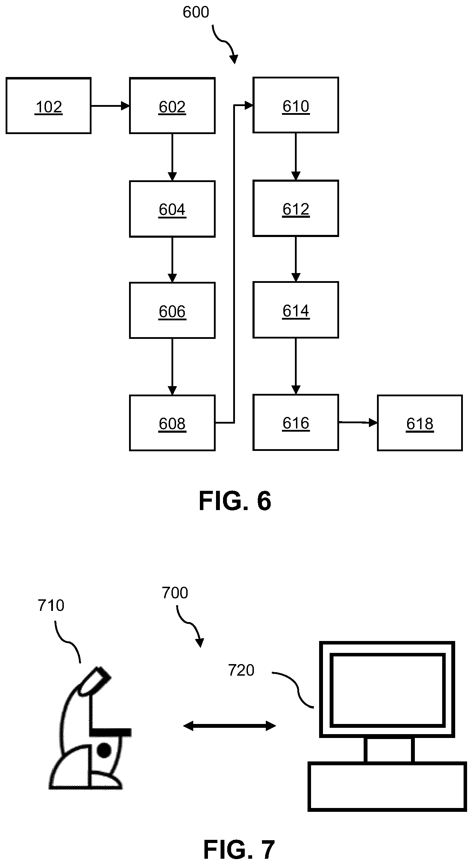

The noisy raw image 102 is provided 502 to the opening operation 410 and/or the closing operation 420. The opening operation 410 and/or the closing operation 420 are applied iteratively as described with respect to FIG. 4A and FIG. 4B. The iterative approach is further illustrated and described with respect to FIG. 6.

The morphological operation 500 may comprise two branches 500a, 500b. One branch 500a may provide the structural noise compensation regarding the horizontal components $I_{horz}$ 506. The other branch 500b may provide the structural noise compensation regarding the vertical components $I_{vert}$ 508.

The noisy raw image 102 may further be provided 504 to any of the branches 500a, 500b of the morphological operation 500 to be transferred to a subtraction operation 51 0a, 510b of the respective branches 500a, 500b. In the subtraction operation 510a of the horizontal branch 500a the $I_{horz}$ 506 may be subtracted from the noisy raw image 102 provided 504 to the subtraction operation 510a of the horizontal branch 500a. This results in an image, $I_{horz}'$ 512a, wherein the horizontal structural noise has been corrected.

In the subtraction operation 510b of the vertical branch 500b the $I_{vert}$ 508 may be subtracted from the noisy raw image 102 provided 504 to the subtraction operation 510b of the vertical branch 500b. This results in an image, $I_{vert}'$ 512b, wherein the vertical structural noise has been corrected.

The horizontally corrected image 512a and the vertically corrected image 512b may be provided to a minimum operation 520 and to a maximum operation 530. In the minimum operation 520 a minimum $I_{min}$ 522 may be calculated from a comparison of the horizontally corrected image 512a and the vertically corrected image 512b, particularly on a pixel-by-pixel basis. As matter of example, from each corresponding pixel pair from the horizontally corrected image 512a and the vertically corrected image 512b the minimum pixel value may be chosen, and the minimum may be assembled as minimum image $I_{min}$ 522.

In the maximum operation 530 a maximum $I_{max}$ 532 may be calculated from a comparison of the horizontally corrected image 512a and the vertically corrected image 512b, particularly on a pixel-by-pixel basis. As matter of example, from each corresponding pixel pair from the horizontally corrected image 512a and the vertically corrected image 512b the maximum pixel value may be chosen and assembled to a maximum image as $I_{max}$ 532.

The minimum $I_{min}$ 522 and the maximum $I_{max}$ 532 may further be provided to an averaging operation 540. In the averaging operation 540 an average value to provide an averaged image $I_{avg}$ 542 to be calculated based on the minimum values $I_{min}$ 522 and the maximum values $I_{max}$ 532, particularly on a pixel-by-pixel basis. The average image $I_{avg}$ 542 is further provided to a summation operation 534 that enables the addition of an (positive or negative) offset 536 to generate a final output image $I_{out}$ 538. This final output image $I_{out}$ 538 may be corrected for structured noise. The structured noise could have been the structure 430 that has been identified as structure in a noisy image as described with respect to FIG. 4A to FIG. 4C.

The operations and ongoing method steps described with respect to FIG. 5 can also be represented as pseudo-code as shown in the following formulas (2) to (9). It is assumed that the noisy raw image 102 may have 100 × 100 pixels as matter of example. The pixel size is N. Alternatively, or additionally, the pixel size N may be chosen as cut-off size for structural elements and/or as cut of size for kernel size K to avoid eliminating potentially relevant real structural elements represented in the noisy raw image $I_{in}$ 102. The offset 536 may be set to positive values as well as negative values. Here it is preset to value 100 as matter of example only.

$$N=121, \text{offset} = 100$$

$$(2) \quad \text{Iterative Open \& Close 1xK, K = 3...N -> } I_{vert}$$

$$(3) \quad I_{vert}' = I_{in} - I_{vert}$$

$$(4) \quad \text{Iterative Open \& Close Kx1, K = 3...N -> } I_{horz}$$

$$(5) \quad I_{horz}' = I_{in} - I_{horz}$$

$$(6) \quad I_{min} = \text{Min}(I_{vert}', I_{horz}')$$

$$(7) \quad I_{max} = \text{Max}(I_{vert}', I_{horz}')$$

$$(8) \qquad I_{avg} = (I_{min} + I_{max}) / 2$$

$$(9) \qquad I_{out} = I_{avg} + \text{offset}$$

FIG. 6 illustrates a schematic overview of an iterative opening and closing operation workflow 600 configured for IID noise removal in a workflow as shown in FIG. 5. Particularly, it may be that the respective structural elements 414, 416, 418, 422 or respective kernels of size K may be implemented in an iterative opening operation 410 and/or closing operation 420 in a horizontal branch 500a and/or vertical branch 500b in a morphological operation 500 as illustrated in FIG. 5 and described accordingly.

The iterative opening and closing operation workflow 600 may correspond to the iterative IID noise removal 304. IID noise removal may be used as described above to isolate respective structural features (structure 430 in FIG. 4C) and/or to remove IID noise in the image independent from any structural information. In this procedure as matter of example and in line with the embodiments described above, a 1-D closing operation 420 and a 1D opening operation may be iteratively applied. This may be done in both vertical and horizontal directions, with increasing kernel size over each iteration. The respective incrementation may be as follows. The noisy raw image 102 may be provided to the workflow 600. Closing operations 420 and opening operations 410 are of pixel size 1 × kernel size K and/or kernel size K × 1. As matter of example, K is set to increment from 3 to 5. Thus, a closing operation 602 of 1×3 is followed by an opening operation 604 of 1×3. Next, a closing operation 606 of 3×1 may be performed, followed by an opening operation 608 of 3×1. Thereafter a closing operation 610 of 1×5 may be performed followed by an opening operation 612 of 1×5. A closing operation 614 of 5×1 may be followed by an opening operation 616 of 5×1. In case the kernel size K is set to a maximum of 5, the iterative opening and closing operation workflow ends and delivers an output 618.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some embodiments relate to a microscope 710 comprising a system to perform a method as described in connection with one or more of the Figs. 1 to 6. Alternatively, a microscope 710 may be part of or connected to a system structured and configured to perform a method as described in connection with one or more of the Figs. 1 to 6. Some embodiments relate to a telescope (not shown) comprising a system to perform a method as described in connection with one or more of the Figs. 1 to 6. Alternatively, a telescope may be part of or connected to a system structured and configured to perform a method as described in connection with one or more of the Figs. 1 to 6. Fig. 7 shows a schematic illustration of a system 700 configured to perform a method described herein. The system 700 comprises a microscope 710 and a computer system 720. The microscope 710 is configured to take images and is connected to the computer system 720. The computer system 720 is configured to execute at least a part of a method described herein. The computer system 720 may be configured to execute a machine learning algorithm. The computer system 720 and microscope 710 may be separate entities but can also be integrated together in one common housing. The computer system 720 may be part of a central processing system of the microscope 710 and/or the computer system 720 may be part of a subcomponent of the microscope 710, such as a sensor, an actor, a camera or an illumination unit, etc. of the microscope 310.

The computer system 720 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 720 may comprise any circuit or combination of circuits. In one embodiment, the computer system 720 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 320 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 720 may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system 720 may also include a display device, one or more speakers, and a keyboard and/or controller, which can include a mouse, trackball, touch screen, voice-recognition device, or any other device that permits a system user to input information into and receive information from the computer system 720.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## LIST OF REFERENCE SIGNS

| | |
|---|---|
| 100 | computer-implemented method configured to train an image denoising machine-learning model |
| 102 | noisy raw image |
| 104a, ... 104h | unidentical copies |
| 106 | machine learning model / convolutional neural network |
| 108 | random noise optimized image |
| 110 | copy of the noisy raw image |
| 112 | predicting at least one guiding image |
| 114 | guiding image |
| 116 | decision function / loss function |

| | |
|---|---|
| 200 | computer-implemented denoising method configured to denoise an image |
| 202 | image to be denoised |
| 204a, ... 204h | identical copies |
| 206 | trained machine learning model / trained convolutional neural network |
| 208 | noise corrected output image |
| 300 | independent prediction workflow |
| 302 | structured noise removal / non-IID noise removal |
| 304 | random noise removal / IID noise removal |
| 306 | normalization |
| 400 | structure isolation workflow |
| 410 | opening operation |
| 412 | random noise overlaying a structure |
| 414, 416, 418, 422 | structural elements |
| 420 | closing operation |
| 430 | structure |
| 500 | morphological operation |
| 500a | horizontal branch |
| 500b | vertical branch |
| 502 | providing a noisy raw image to a morphological operation |
| 504 | providing the noisy raw image to a subtraction operation |
| 506 | horizontal components $I_{horz}$ |
| 508 | vertical components $I_{vert}$ |
| 510a | subtraction operation of the horizontal branch |
| 510b | subtraction operation of the vertical branch |
| 512a | horizontal structural noise corrected image |
| 512b | vertical structural noise corrected image |
| 520 | minimum operation |
| 522 | minimum $I_{min}$ |
| 530 | maximum operation |
| 532 | maximum $I_{max}$ |
| 534 | summation operation |
| 536 | offset |
| 538 | final output image $I_{out}$ |
| 540 | averaging operation |
| 542 | averaged image $I_{avg}$ |
| 600 | iterative opening and closing operation workflow |
| 602 | closing operation of $1\times3$ |
| 604 | opening operation of $1\times3$ |
| 606 | closing operation of $3\times1$ |
| 608 | opening operation of $3\times1$ |
| 610 | closing operation $1\times5$ |
| 612 | opening operation $1\times5$ |
| 614 | closing operation $5\times1$ |
| 616 | opening operation $5\times1$ |
| 618 | output |
| 700 | system |
| 710 | microscope |
| 720 | computer device |

## Claims

1. A computer-implemented method (100) for training an image denoising machine-learning model with at least the following steps:

    providing at least one modified copy of a noisy raw image (102) to the machine-learning model (106);
    training the machine-learning model (106) based at least in part on the at least one modified copy of the noisy raw image (102);

predicting at least one random-noise-corrected image (108) from the noisy raw image (102) using the machine-learning model (106);

predicting (112) at least one guiding image (114) with structured noise corrected from the noisy raw image (102) or from a copy (110) of the noisy raw image (102);

optimizing the result of a decision function (116), wherein the decision function (116) is configured for comparing at least a part of the random-noise-corrected image (108) with at least a part of the guiding image (114).

2. The method (100) of claim 1, wherein the decision function (116) is a loss function to be minimized.

3. The method (100) of claim 2, wherein the loss function is of the type:

$$\mathcal{L} = \sum_t \left[ \| I_t - I'_t \| + \lambda \| I_{t\_n} - I'_t \| \right];$$

wherein $I_t$ is the noisy raw image, $I'_t$ is a predicted image (108), $I_{t\_n}$ is the guiding image (114), and $\lambda$ is a weighting factor.

4. The method (100) of any one of the preceding claims, wherein the predicted image is a random-noise-corrected image (108) and wherein the random-noise-corrected image (108) is fed back into the method (100) to iteratively optimize the result of the decision function (116) and/or to train the machine-learning model (106); and/or wherein a guiding image (114) is fed back into the method (100) to iteratively optimize the result of the decision function (116) and/or to train the machine-learning model (106).

5. A computer-implemented method (100a) for training a random-noise-image-denoising machine-learning model (106) with at least the following steps:

providing at least one noisy raw image (102);

providing at least one unidentical copy (104a, ... 104h) of the noisy raw image (102), wherein the at least one unidentical copy (104a, ... 104h) is shifted by at least one pixel with respect to the noisy raw image (102);

feeding the at least one unidentical copy (104a, ... 104h) to the machine-learning model (106) to be trained;

training the machine-learning model (106) based at least in part on the at least one unidentical copy (104a, ... 104h);

predicting at least one random-noise-optimized image (108) from the at least one unidentical copy (104a, ... 104h) using the machine-learning model (106).

6. The method (100a) of claim 5, wherein eight unidentical copies (104a, ... 104h) of the noisy raw image (102) are made, each copy (104a, ... 104h) shifted by at least one pixel in a direction of the noisy raw image (102); and/or

wherein the machine-learning model (106) comprises at least a convolutional neural network; and/or

wherein a structured noise is at least partially corrected based on a guiding image (116).

7. A computer-implemented image denoising method (200) with at least the following steps:

providing at least one identical copy (204a, ... 204h) of a noisy raw image (202);

feeding the at least one identical copy (204a, ... 204h) into a trained machine-learning model (206), preferably trained based on a method according to any one of claims 1 to 6;

generating an output image (208) with corrected noise.

8. The method (200) of claim 7, wherein eight identical copies (204a, ... 204h) of the noisy raw image (202) are made and fed into the trained machine-learning model (206); and/or

wherein a structured noise is at least partially corrected based on a guiding image (116); and/or

wherein the machine-learning model (106) comprises at least a convolutional neural network.

9. The method (200) of any one of the claims 1 to 4 or a method (200) according to claim 8, wherein the guiding image (114) is predicted (112, 300) based on at least one of the following steps:

a structured noise removal (302);

a random noise removal (304); or
a normalization (306).

10. The method (200) of claim 9, wherein the normalization (306) comprises at least one of:

an increase of signal strength while suppressing noise;
an adjustment of the normalization scale such that the signal intensity increases;
an adjustment of the normalization scale such that the signal intensity increases as much as possible without saturation; or
an adjustment of the normalization scale such that the normalization scale is settled to the 2 to 99.98 percentile.

11. The method (100) of any one of the claims 1 to 4 or a method (200) according to any one of claims 8 to 10, wherein the structured noise is removed based on varying sizes of structuring elements (414, 416, 418, 422) and/or kernels in a morphological operation (500); and/or

wherein the structured noise is removed based on a morphological operation (500) applying at least a single straight line as structuring element (414, 416, 418, 422) and/or as kernel; and/or
wherein the structured noise is removed based on an opening and/or closing operation applied as morphological operation (500) identifying the horizontal and/or vertical components of an image (102, 110); and/or
wherein an offset (536) is added or subtracted from the image (102, 110) during structured noise removal.

12. A data processing apparatus, in particular a computer device (720) or a control unit for an imaging device or imaging system (710), comprising means for carrying out the method of any one of claims 1-11.

13. A computer program with a program code for performing the method of any one of claims 1-11 when the computer program is run on a processor.

14. A dataset, in particular a training dataset, validation dataset and/or training dataset, usable for a machine-learning model, the dataset comprising a plurality of images (102, 110, 104a, ... 104h, 114), or references thereto, obtained using the method (100, 200) of any one of claims 1-11.

15. An imaging device or imaging system (710), particularly a microscope or telescope, configured for use in the method of any one of claims 1-11.

**FIG. 1**

**FIG. 2**

300

102

112

302

304

306

114

**FIG. 3**

FIG. 4A

FIG. 4B

FIG. 4C

FIG. 5

600

| | | | |
|---|---|---|---|
| 102 | → | 602 | |

602 → 604 → 606 → 608

608 → 610 → 612 → 614 → 616 → 618

**FIG. 6**

710   700   720

**FIG. 7**

Europäisches
Patentamt

European
Patent Office

Office européen
des brevets

**EUROPEAN SEARCH REPORT**

Application Number

EP 22 21 5049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GERNOT RIEGLER ET AL: "A Deep Primal-Dual Network for Guided Depth Super-Resolution", ARXIV.ORG, CORNELL UNIVERSITY LIBRARY, 201 OLIN LIBRARY CORNELL UNIVERSITY ITHACA, NY 14853, 28 July 2016 (2016-07-28), XP080717351, | 1,2,4, 7-10, 12-15 | INV. G06T5/00 G06T5/30 ADD. G06T5/40 |
| A | * 3 * * figures 1, 2 * | 3,5,6,11 | |
| X | XU SHUANG ET AL: "A model-driven network for guided image denoising", INFORMATION FUSION, ELSEVIER, US, vol. 85, 4 April 2022 (2022-04-04), pages 60-71, XP087061525, ISSN: 1566-2535, DOI: 10.1016/J.INFFUS.2022.03.006 [retrieved on 2022-04-04] | 1,2,4, 7-10, 12-15 | |
| A | * 1, 3, 4.1, * * figure 4 * | 3,5,6,11 | TECHNICAL FIELDS SEARCHED (IPC) G06T |
| X | TIANFANG ZHU ET AL: "Joint Optical Neuroimaging Denoising with Semantic Tasks", ARXIV.ORG, CORNELL UNIVERSITY LIBRARY, 201 OLIN LIBRARY CORNELL UNIVERSITY ITHACA, NY 14853, 22 September 2021 (2021-09-22), XP091057836, | 1-5, 7-10, 12-15 | |
| Y | * 2, 2.1, 2.2, 2.3 * * figure 1 * | 8,11 | |

-/--

The present search report has been drawn up for all claims

| Place of search | Date of completion of the search | Examiner |
|---|---|---|
| Munich | 13 September 2023 | Gitzenis, Savvas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 4

**EUROPEAN SEARCH REPORT**

Application Number

EP 22 21 5049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YAOCHEN XIE ET AL: "Noise2Same: Optimizing A Self-Supervised Bound for Image Denoising", ARXIV.ORG, CORNELL UNIVERSITY LIBRARY, 201 OLIN LIBRARY CORNELL UNIVERSITY ITHACA, NY 14853, 22 October 2020 (2020-10-22), XP081795860, | 1-4, 7-10, 12-15 | |
| A | * 4.1 * <br> * figure 1 * | 5,6,11 | |
| | ----- | | |
| Y | US 2011/125030 A1 (BAI JIE [JP] ET AL) 26 May 2011 (2011-05-26) | 11 | |
| A | * paragraph [0002] * <br> * paragraph [0013] * | 1-10, 12-15 | |
| | ----- | | |
| Y | HAN LIANG ET AL: "Phase Contrast Image Restoration by Formulating Its Imaging Principle and Reversing the Formulation With Deep Neural Networks", IEEE TRANSACTIONS ON MEDICAL IMAGING, IEEE, USA, vol. 42, no. 4, 19 November 2022 (2022-11-19), pages 1068-1082, XP011937843, ISSN: 0278-0062, DOI: 10.1109/TMI.2022.3223677 [retrieved on 2022-11-21] | 11 | |
| A | * II.D * | 1-10, 12-15 | TECHNICAL FIELDS SEARCHED (IPC) |
| | ----- | | |
| Y | US 2010/074486 A1 (BROSER PHILIP J [GB] ET AL) 25 March 2010 (2010-03-25) | 11 | |
| A | * paragraph [0065] * <br> * figure 5 * | 1-10, 12-15 | |
| | ----- | | |
| | -/-- | | |

The present search report has been drawn up for all claims

| Place of search | Date of completion of the search | Examiner |
|---|---|---|
| Munich | 13 September 2023 | Gitzenis, Savvas |

EPO FORM 1503 03.82 (P04C01)

page 2 of 4

## EUROPEAN SEARCH REPORT

Application Number

EP 22 21 5049

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PARVATHI SITANABOINA S L ET AL: "A Comprehensive Survey on Medical Image Blob Detection and Classification Models", 2021 INTERNATIONAL CONFERENCE ON ADVANCEMENTS IN ELECTRICAL, ELECTRONICS, COMMUNICATION, COMPUTING AND AUTOMATION (ICAECA), IEEE, 8 October 2021 (2021-10-08), pages 1-6, XP034070476, DOI: 10.1109/ICAECA52838.2021.9675575 [retrieved on 2022-01-07] | 11 | |
| A | * III.B, III.D * | 1-10, 12-15 | |
| | ----- | | |
| X | ALEXANDER KRULL ET AL: "Noise2Void – Learning Denoising from Single Noisy Images", ARXIV.ORG, CORNELL UNIVERSITY LIBRARY, 201 OLIN LIBRARY CORNELL UNIVERSITY ITHACA, NY 14853, 27 November 2018 (2018-11-27), XP081199743, | 5-7,9, 10,12-15 | |
| Y | * 2, 2.1, 2.2, 2.3, 2.4 * | 8,11 | TECHNICAL FIELDS SEARCHED (IPC) |
| A | * figures 1-3 * | 1-4 | |
| | ----- | | |
| X | SAMULI LAINE ET AL: "High-Quality Self-Supervised Deep Image Denoising", ARXIV.ORG, CORNELL UNIVERSITY LIBRARY, 201 OLIN LIBRARY CORNELL UNIVERSITY ITHACA, NY 14853, 29 January 2019 (2019-01-29), XP081510292, | 5-7, 12-15 | |
| A | * 1-4 *<br>* figure 1 * | 1-4,8-11 | |
| | ----- | | |
| | -/-- | | |

The present search report has been drawn up for all claims

| Place of search | Date of completion of the search | Examiner |
|---|---|---|
| Munich | 13 September 2023 | Gitzenis, Savvas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 21 5049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | S-C B SHIH-CHUNG B LO* ET AL: "A Multiple Circular Path ConvolutionNeural Network System for Detectionof Mammographic Masses", IEEE TRANSACTIONS ON MEDICAL IMAGING, IEEE, USA, vol. 21, no. 2, 1 February 2002 (2002-02-01), XP011036199, ISSN: 0278-0062 | 7-15 | |
| Y | * III.B * | 11 | |
| A | * figure 1 * | 1-4 | |
| A | HUAI LI ET AL: "Computerized Radiographic Mass Detection-Part I: Lesion Site Selection by Morphological Enhancement and Contextual Segmentation", IEEE TRANSACTIONS ON MEDICAL IMAGING, IEEE, USA, vol. 20, no. 4, 1 April 2001 (2001-04-01), XP011036079, ISSN: 0278-0062 * II, III * | 1-15 | |

TECHNICAL FIELDS
SEARCHED       (IPC)

The present search report has been drawn up for all claims

| Place of search | Date of completion of the search | Examiner |
|---|---|---|
| Munich | 13 September 2023 | Gitzenis, Savvas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 4 of 4

Europäisches
Patentamt

European
Patent Office

Office européen
des brevets

**Application Number**

**EP 22 21 5049**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

# LACK OF UNITY OF INVENTION
# SHEET B

The Search Division considers that the present European patent application does not comply with the requirements of unity of invention and relates to several inventions or groups of inventions, namely:

```
1. claims: 1-4(completely); 7-15(partially)

   See the annexed provisional opinion accompanying the partial
   search results (EPO Form 1707)
                       ---


2. claims: 5, 6(completely); 7-15(partially)

   See the annexed provisional opinion accompanying the partial
   search results (EPO Form 1707)
                       ---


3. claims: 7-15(partially)

   See the annexed provisional opinion accompanying the partial
   search results (EPO Form 1707)
                       ---
```

## ANNEX TO THE EUROPEAN SEARCH REPORT
## ON EUROPEAN PATENT APPLICATION NO.

EP 22 21 5049

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2023

| Patent document cited in search report | | Publication date | Patent family member(s) | | Publication date |
|---|---|---|---|---|---|
| US 2011125030 | A1 | 26-05-2011 | JP | 5331797 B2 | 30-10-2013 |
| | | | JP | WO2009128213 A1 | 04-08-2011 |
| | | | US | 2011125030 A1 | 26-05-2011 |
| | | | WO | 2009128213 A1 | 22-10-2009 |
| US 2010074486 | A1 | 25-03-2010 | EP | 2084668 A1 | 05-08-2009 |
| | | | US | 2010074486 A1 | 25-03-2010 |
| | | | WO | 2008061548 A1 | 29-05-2008 |

EPO FORM P0459

For more details about this annex : see Official Journal of the European Patent Office, No. 12/82